# EUROPEAN PATENT SPECIFICATION

(11) **EP 2 557 290 B1**
(45) Date of publication and mention of the grant of the patent: **25.03.2015**
(21) Application number: 12174910.5
(22) Date of filing: 04.07.2012
(51) Int. Cl.: F01N 13/18

(54) **Exhaust pipe structure of internal combustion engine**
Abgasleitungsstruktur für einen Verbrennungsmotor
Structure de tuyau d'échappement d'un moteur à combustion interne

(30) Priority: 09.08.2011 JP 2011174331
(43) Date of publication of application: 13.02.2013
(73) Proprietor: SUZUKI MOTOR CORPORATION, Hamamatsu-shi Shizuoka 432-8611 (JP)
(72) Inventor: Akita, Yoshikatsu, Hamamatsu-shi, Shizuoka 432-8611 (JP); Takeda, Tetsuji, Hamamatsu-shi, Shizuoka 432-8611 (JP)
(74) Representative: Viering, Jentschura & Partner Patent- und Rechtsanwälte

(56) References cited:
- EP-A1- 1 643 095
- JP-A- 2 221 625
- JP-A- 2000 234 514
- JP-A- 2010 269 725
- US-A- 4 925 634

## Description

### BACKGROUND OF THE INVENTION

### [Field of the Invention]

The present invention relates to an exhaust pipe structure of an engine in a vehicle such as a motorcycle.

### [Description of the Related Art]

A vehicle such as a motorcycle is provided with an exhaust emission control device in which an exhaust gas discharged from an engine is purified to be discharged into the atmosphere in a harmless state. Regarding one using a catalyst as the above exhaust emission control device, in one described in Japanese Laid-open Patent Publication No. 2010-083301a catalyst unit is disposed in the middle of an exhaust pipe having one end thereof connected to an engine and having the other end thereof connected to a muffler.

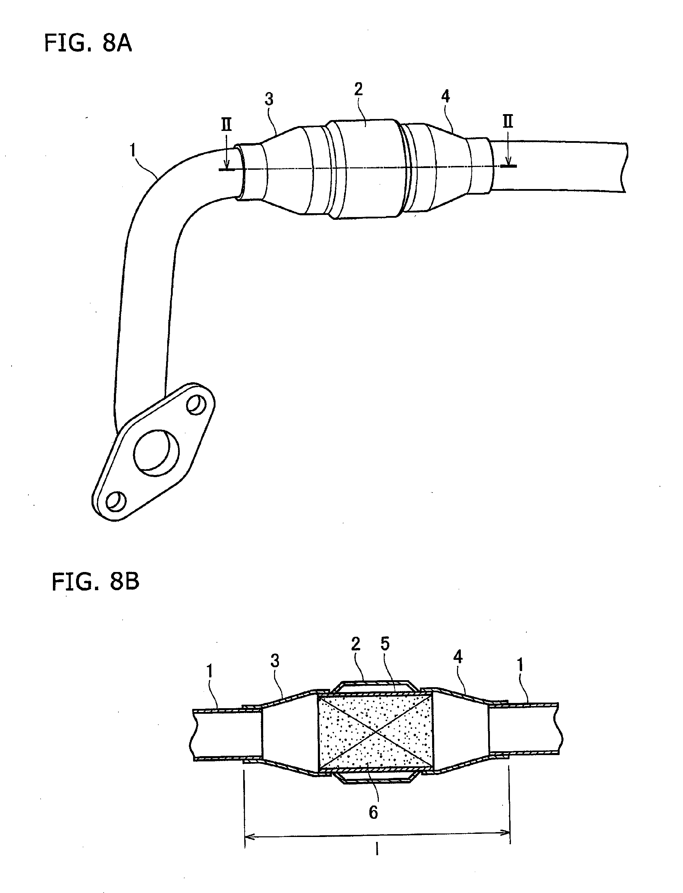

Such as the above example, in the case when a catalyst is provided in an exhaust pipe 1 as illustrated in Fig. 8A and Fig. 8B, for example, a catalyst unit 2, on the exhaust upstream side thereof, is connected to the exhaust pipe 1 via a taper pipe 3 being a connection member, and the catalyst unit 2, on the exhaust downstream side thereof, is connected to the exhaust pipe 1 via a taper pipe 4 being a connection member respectively. Incidentally, in the catalyst unit 2, a catalyst 6 is fitted in a casing 5.

However, the taper pipes 3 and 4 each have been required to secure a certain length according to the diameter difference between the exhaust pipe 1 and the catalyst unit 2. As a result, a length 1 of an overall linear portion including the catalyst unit 2 has been lengthened, and a significant restriction has had to be placed on installation of the exhaust pipe 1. For this reason, there have been problems that the degree of freedom of a layout of the exhaust pipe 1 including the catalyst unit 2 is limited, and the like.
US 4,925,634 A discloses a catalytic converter for use with an internal combustion chamber. The catalytic converter comprises casing halves which are divided from each other in the lengthwise direction of the catalytic converter. The catalytic converter includes a body portion having a generally cylindrical wall. The body portion is tapered at opposite ends thereof to terminate at a pair of connecting portions, which are smaller in diameter than the body portion. A honeycomb catalyst carrier which is housed in a retainer member is put into the body portions of the casing halves. However, due to the cylindrical casing of the catalyst the degree of freedom of a layout of the exhaust pipe including the catalyst unit is limited.
JP 2000-234514 A discloses a catalyst unit which has a quite complicated shape. At the front of the catalytic unit the exhaust pipe is connected which has a straight line shape. However, also for this catalytic unit the degree of freedom is limited. JP 2010-269725 A discloses a catalyst unit with a substantially rectangular shape. However, also for this catalytic unit the degree of freedom is limited. EP 1 643 095 A1 discloses an exhaust mounting structure for a motorcycle with a catalyst unit having a substantially cylindrical shape. However, also for this catalytic unit the degree of freedom is limited.

### SUMMARY OF THE INVENTION

In consideration such circumstances, the present invention has an object to provide an exhaust pipe structure of an internal combustion engine capable of effectively improving the degree of freedom of an exhaust pipe layout, and the like.

An exhaust pipe structure of an internal combustion engine of the present invention that includes: an engine in which a cylinder disposed substantially horizontally is projectingly provided on a vehicle body frame; an exhaust pipe through which a combustion gas is discharged from a combustion chamber in a cylinder head in the engine; and a catalyst disposed in the middle of the exhaust pipe, the exhaust pipe structure includes: a catalyst holding part holding an end portion of the catalyst, the catalyst holding part formed to be divided by a plane passing through a center axis of the exhaust pipe.

Further, in the exhaust pipe structure of the internal combustion engine of the present invention, the catalyst holding part holds the catalyst on an exhaust upstream side.

Further, in the exhaust pipe structure of the internal combustion engine of the present invention, the catalyst holding part is formed to bend from an immediate upstream side of the catalyst.

Further, in the exhaust pipe structure of the internal combustion engine of the present invention, the catalyst holding part is formed in a manner that a cross-sectional area thereof is gradually increased to the catalyst.

Further, in the exhaust pipe structure of the internal combustion engine of the present invention, the catalyst holding part is disposed under the engine.

### BRIEF DESCRIPTION OF THE DRAWINGS

Fig. 1 is a side view illustrating an overall structure of a motorcycle according to the present invention;
Fig. 2 is a side view illustrating a state where a power unit according to the present invention is mounted on a vehicle;
Fig. 3 is a bottom view illustrating the state where the power unit according to the present invention is mounted on the vehicle;
Fig. 4 is a front view of the power unit according to the present invention;
Fig. 5 is a bottom view of the power unit according to the present invention;
Fig. 6 is a perspective view of an essential part of an exhaust pipe structure according to the present invention;
Fig. 7A and Fig. 7B each illustrate the essential part of the exhaust pipe structure according to the present invention, in which Fig. 7A is a cross-sectional view along a longitudinal direction and Fig. 7B is a cross-sectional view taken along a line I-I in Fig. 7A; and
Fig. 8A and Fig. 8B each illustrate an essential part of a conventional exhaust pipe structure, in which Fig. 8A is a perspective view and Fig. 8B is a cross-sectional view taken along a line II-II in Fig. 8A.

### DETAILED DESCRIPTION OF THE PREFERRED EMBODIMENTS

Hereinafter, a preferred embodiment in an exhaust pipe structure of an internal combustion engine according to the present invention will be explained based on the drawings.

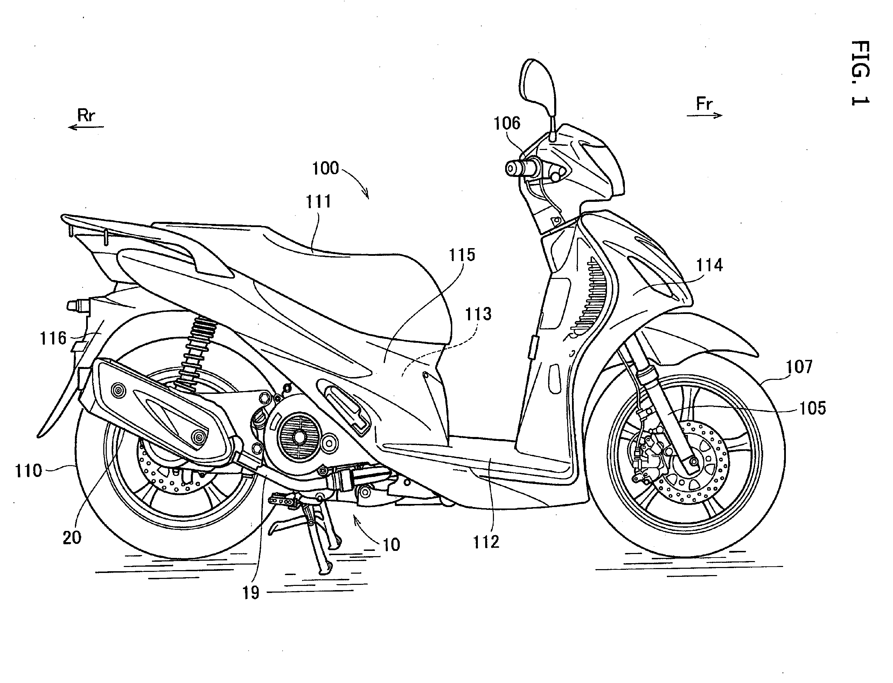

Fig. 1 is a side view of a motorcycle according to the present invention. First, an overall structure of the motorcycle will be explained with Fig. 1. Incidentally, in the drawings to be used in the following explanation including Fig. 1, the front of a vehicle is indicated by an arrow Fr and the rear of the vehicle is indicated by an arrow Rr, and further the lateral right side of the vehicle is indicated by an arrow R and the lateral left side of the vehicle is indicated by an arrow L as necessary.

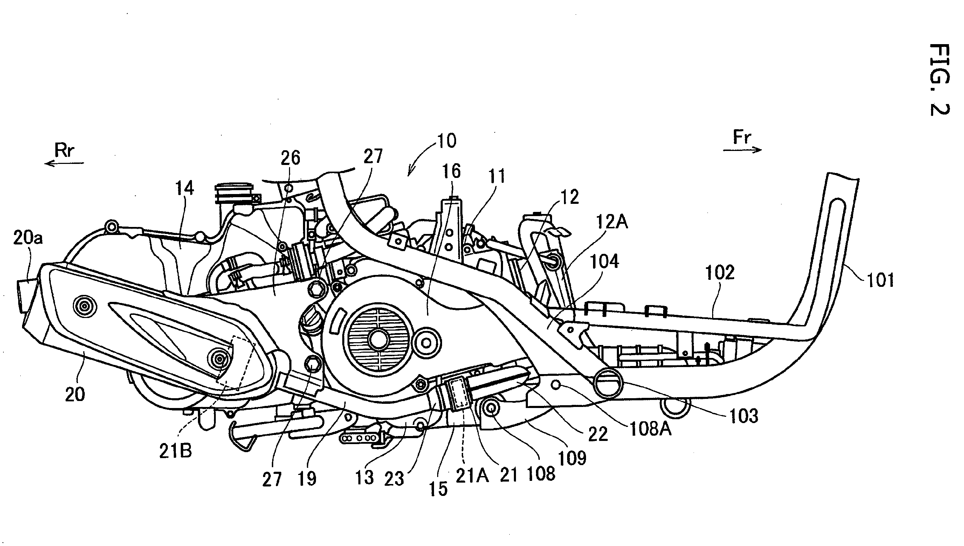

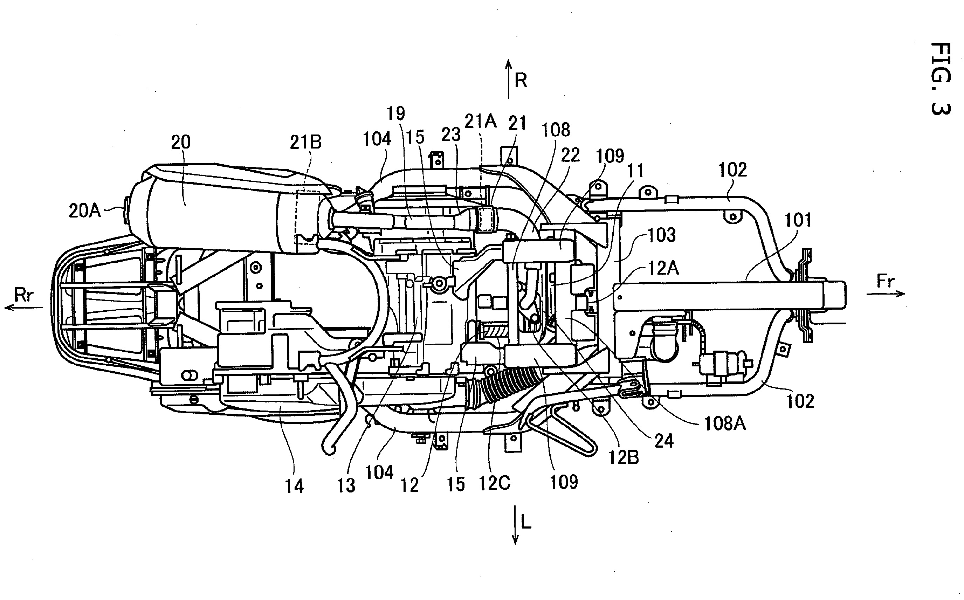

A vehicle 100 has a vehicle body framework composed of a plurality of vehicle body frames made of steel or aluminum alloy, and is structured through fitting of various parts to the vehicle body frames. Incidentally, as a structure example of the vehicle body frames, Fig. 2 and Fig. 3 are referred accordingly. A down tube 101 being one of the vehicle body frames has a front end thereof joined to a steering head pipe (not illustrated) and extends substantially downward from the steering head pipe, and to the vicinity of a lower end portion of the down tube 101, a pair of right and left under frames 102 is connected. These under frames 102 extend substantially rearward. To a rear end portion of the down tube 101, a bridge pipe 103 extending in the right and left direction is joined, and to right and left both ends of the above bridge pipe 103, a pair of right and left rear frames 104 is joined as one of the vehicle body frames, and the rear frames 104 each obliquely extend substantially rearward and upward.

The above-described steering head pipe rotatably supports a front fork 105, and the front fork 105 has a handle bar 106 fixed to an upper end thereof and has a front wheel 107 rotatably supported to the lower end side thereof.

Further, on the rear side of the bridge pipe 103, a swing-type power unit 10 including an engine 11 is supported so as to be interposed between the pair of rear frames 104. The above power unit 10 is made by unitizing a cylinder assembly 12 of the engine 11, a crank case 13, a power transmission device 14 containing a continuously variable transmission made by using a belt and a pulley, and so on, and is supported swingably in the up and down direction around a swing axis 108 being a swingable fulcrum on the vehicle body frame side via a pair of stays 15 extending forward from the crank case 13. In this embodiment, two swingable fulcrums are provided, that is, a pair of brackets 109 supporting the swing axis 108 extends rearward in the rear side of the bridge pipe 103 with a space therebetween in the right and left direction and these brackets 109 are swingably supported around a swing axis 108A. Incidentally, the right side of the engine 11 is covered with an engine cover 16 as illustrated in Fig. 2.

The power unit 10 rotatably supports a rear wheel 110 (see Fig. 1) via the power transmission device 14 on the rear side of the vehicle. For this reason, the power unit 10 and the rear wheel 110 integrally swing around the swing axis 108, in other words, the power unit 10 as a whole functions as a swing arm. Incidentally, the axle side of the rear wheel 110 and the rear frames 104 are coupled with each other by a shock absorber (not illustrated).

Further, as illustrated in Fig. 1, a seat 111 for a rider to sit on is provided above the power unit 10. A step board 112 on which the rider sitting on the seat 111 puts his or her feet is supported on the under frames 102 (Fig. 2 and Fig. 3) via a not-illustrated step frame. Incidentally, the step board 112 is formed integrally with a leg frame cover constituting a vehicle appearance. Further, between the power unit 10 and the seat 111, a luggage box 113 (whose detailed illustration is omitted) opened/closed by the seat 111 and formed as a housing space of an article and the like is provided.

As the vehicle appearance, various vehicle body covers are supported and attached on and to proper places of the vehicle body frames and the like. A front leg shield 114 covers the front surface side of the vehicle and has turn signals and the like mounted thereon, and continues to the above-described step board 112 integrally. A rear frame cover 115 covers the place from the portion under the seat 111 to the rear side of the vehicle and has turn signals and brake lamps mounted thereon. The space above the rear wheel 110 is coved with a rear fender 116.

The power unit 10 includes the engine 11 and the transmission device 14 as described above, and is one in which the engine 11 and the transmission device 14 are integrated. The power unit 10 has an alignment structure in which as illustrated in Fig. 2 and Fig. 3, the cylinder assembly 12 of the engine 11, the crank case 13, and the transmission device 14 are aligned in order from the front side of the vehicle in a state where the power unit 10 is mounted on the vehicle 100. In the power unit 10, the single cylinder air-cooled engine 11 projectingly provided on the vehicle body frame is included, and is disposed in a manner that the cylinder axis of the engine 11 becomes substantially horizontal along the front and rear direction of the vehicle in this example.

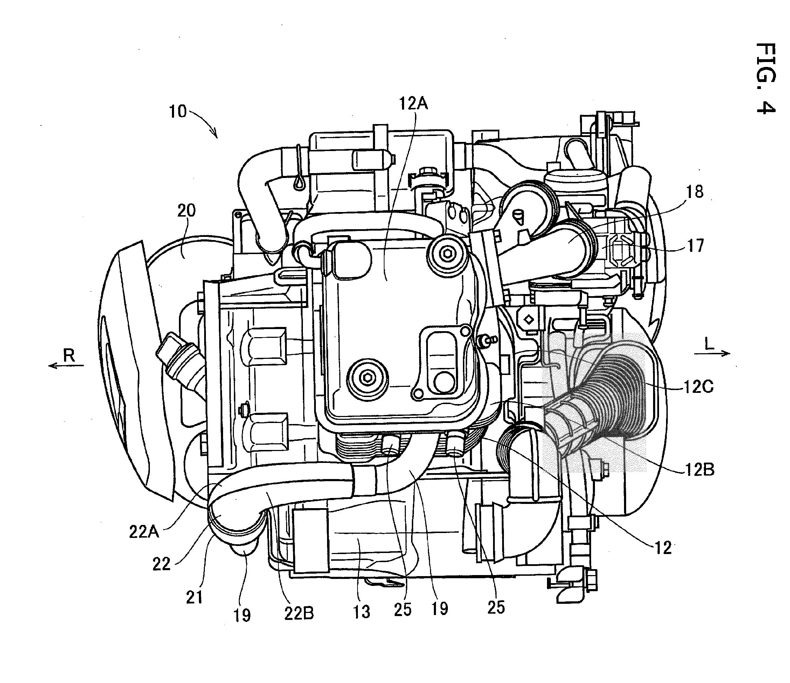

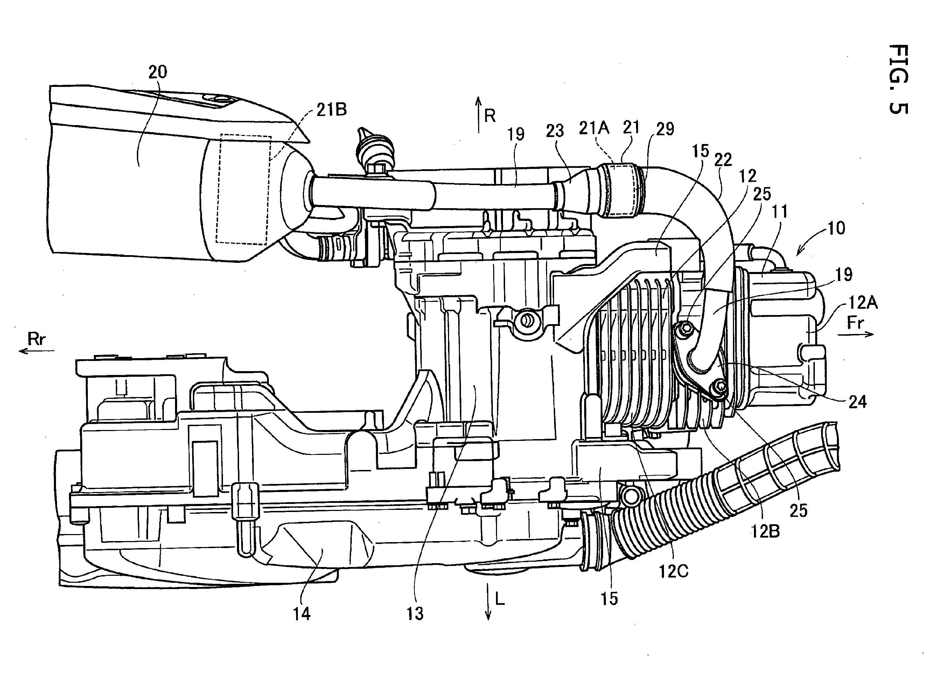

Next, with reference also to Fig. 4 and Fig. 5, the power unit 10 will be further explained. The power unit 10 has an air cleaner (whose detailed illustration is omitted) mounted on the upper surface side of the power transmission device 14 positioned on the rear side of the vehicle, and has a throttle body 17 joined to the front of the above air cleaner. An intake pipe 18 extends forward from the throttle body 17, and a mixed air is supplied to the engine 11 through the above intake pipe 18. Here, the cylinder assembly 12 of the engine 11 is made in a manner that a cylinder head cover 12A, a cylinder head 12B, and a cylinder 12C are sequentially joined to the crank case 13 side. The intake pipe 18, as illustrated in Fig. 4, communicates with an intake port in the cylinder head 12B, and through an intake passage, the purified air is supplied to the intake port in the cylinder head 12B from the air cleaner.

In an exhaust system of the engine 11, in the lower surface side of the cylinder head 12B, an exhaust port is formed slightly close to the left, and an exhaust pipe 19 connected to the above exhaust port extends rearward while bending. Incidentally, a combustion gas is discharged into the exhaust pipe 19 from a combustion chamber in the cylinder head 12B. The exhaust pipe 19 is connected to a muffler 20 at the rear of the vehicle, and as illustrated in Fig. 2 to Fig. 5, a catalyst unit 21 is disposed in the middle of the exhaust pipe 19. The catalyst unit 21, as illustrated in Fig. 5 and the like, is connected to the exhaust pipe 19 on the exhaust upstream side via a holding member 22 being a catalyst holding part, and is connected to the exhaust pipe 19 on the exhaust downstream side via a holding member 23 being a catalyst holding part.

Here, in an attachment structure of the exhaust pipe 19, the muffler 20, and the like, the exhaust pipe 19, as illustrated in Fig. 5, has a front end thereof fastened and fixed to the cylinder head 12B via a bracket 24 by a pair of bolts 25 in this example. Further, the muffler 20, as illustrated in Fig. 2, is fastened and fixed to the vicinity of a rear portion of the crank case 13 by a pair of bolts 27 via a bracket 26 firmly fixed to the muffler 20 so as to extend forward. Incidentally, a lower portion of the above bracket 26 is also joined to the exhaust pipe 19.

The exhaust pipe 19 connecting the engine 11 and the muffler 20 extends from the engine 11 as described above while being bent rearward. The specific state of the exhaust pipe 19 being bent in this embodiment will be explained together with the catalyst unit 21. First, as illustrated in Fig. 4 and the like, the exhaust pipe 19 bends rightward to extend substantially horizontally on the lower surface side of the cylinder head 12B. The exhaust pipe 19 extends to the right side for a distance substantially equal to the width of the crank case 13 and bends rearward, and then is directed to the rear as it is and passes through under the right side of the crank case 13 to be connected to a front end portion of the muffler 20.

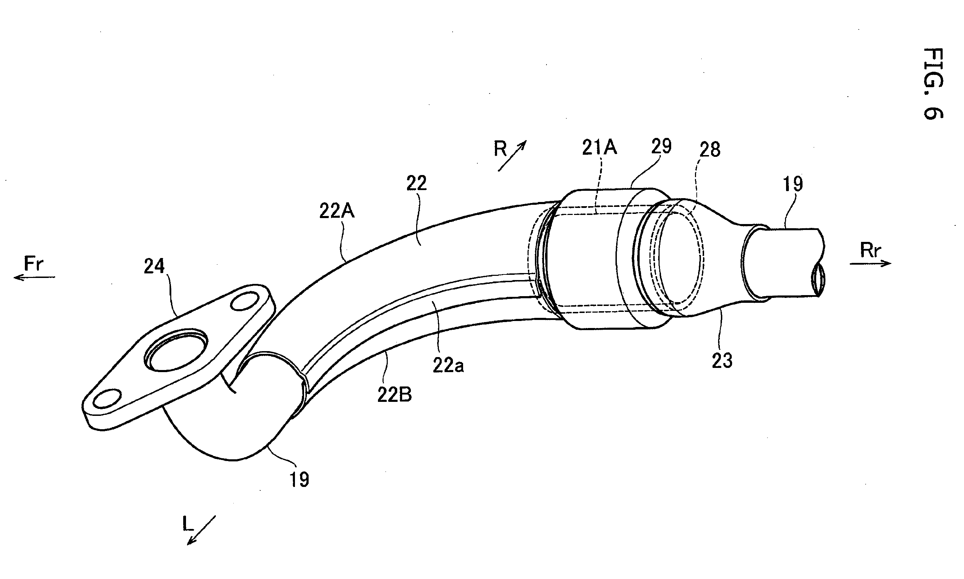

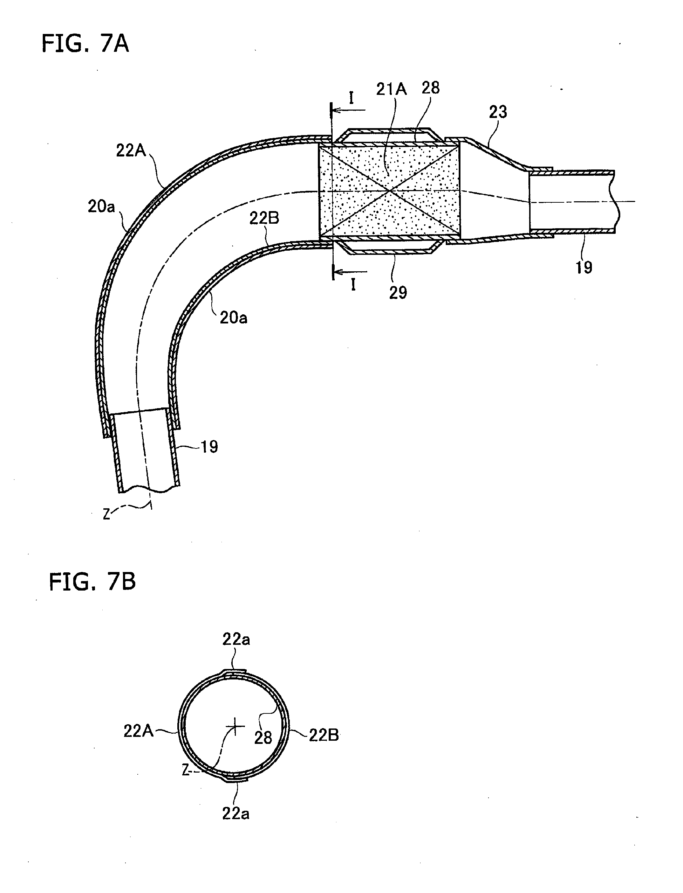

In the present invention in particular, the holding member 22 on the exhaust upstream side is formed to be divided by a plane passing through a center axis Z of the exhaust pipe 19. In Fig. 6 and Fig. 7A, a structure example of the vicinity of the holding member 22 is illustrated, and the holding member 22 holds the catalyst unit 21 on the upstream side of the catalyst unit 21. Here, the catalyst unit 21 has a catalyst 21A housed in, for example, a cylindrical casing 28, and a cover 29 is attached to the circumference of the casing 28. The holding member 22 is joined to the casing 28 in such a manner that one end of the holding member 22 on the rear side is fitted on the outer circumference of a front end portion of the casing 28, and the holding member 22 is joined to the casing 28 in such a manner that the other end of the holding member 22 on the front side is fitted on the outer circumference of the exhaust pipe 19. Incidentally, the holding member 23 on the exhaust downstream side is joined to the casing 28 in such a manner to be fitted on the outer circumference of a rear end portion of the casing 28. Here, the catalyst 21A is for early activation, and in the front end portion of the muffler 20, as illustrated in Fig. 2 and the like, a main catalyst 21B is fitted.

In this example, the holding member 22 has what is called a clamshell structure made in a manner that typically, an upper half member 22A and a lower half member 22B into which the holding member 22 is divided are joined to each other by welding, and at joined portions 22a of the upper half member 22A and the lower half member 22B, the upper half member 22A is joined to the lower half member 22B so as to overlap the lower half member 22B. Incidentally, these upper half member 22A and lower half member 22B are each formed by press working.

Further, as described above, the one end of the holding member 22 on the rear side is fitted on the outer circumference of the front end portion of the casing 28, and the holding member 22 is formed to bend leftward from the immediate upstream side of the catalyst 21A. In the above case, the overall shape of the holding member 22, as is the illustrated example typically, is formed into an arc shape having an arch length of about 1/4 of a circumference, for example, but the above length, the curvature, and the like can be set according to an applicable vehicle type or the like as necessary.

Further, the holding member 22 is formed to bend as described above, and additionally is formed in a manner that its cross-sectional area is increased gradually to the catalyst unit 21. In the above case, as a method of changing the cross-sectional area of the holding member 22, the cross-sectional area may be formed to be substantially proportional to the length of the holding member 22, or may also be formed to be increased gradually by a method other than that of forming the cross-sectional area proportionally to the length.

The holding member 22 incorporated in the power unit 10 is disposed so as to be positioned under the engine 11, namely under the cylinder head 12B and the crank case 13, as illustrated in Fig. 4 and Fig. 5. Further, in a state where the power unit 10 is mounted on the vehicle body frames, as illustrated in Fig.. 2 or Fig. 3, the holding member 22 is disposed so as to get into the space between the swing axis 108 and the swing axis 108A in the front and rear direction and the space between the cylinder head 12B and the bracket 109 (right side) in the vertical direction from the right side.

In the exhaust system in particular of the power unit 10 having the above-described structure, when the engine 11 starts, a combustion gas is discharged into the exhaust pipe 19 from the combustion chamber in the cylinder head 12B via the exhaust port. The above combustion gas passes through the inside of the holding member 22 to flow into the catalyst unit 21. The catalyst 21A in the catalyst unit 21 is heated by the exhaust gas and thereby early activation is achieved, and the exhaust gas further passes through the muffler 20 to be discharged from a tail pipe 20a finally.

In the exhaust pipe structure of the present invention, first, the holding member 22 is formed to be divided into the upper half member 22A and the lower half member 22B. These half-divided members can be separately formed by press working extremely easily and precisely, and as the holding member 22, the degree of freedom of the shape of the cross-sectional area in particular is large. That is, the holding member 22 can be formed by setting and changing the cross-sectional area of the holding member 22 without restraint. Normally, when manufacturing the exhaust pipe of this type, it is formed by using a pipe bending apparatus such as a bender, but it is extremely difficult to secure qualities of shape, dimensional accuracy, and the like. Then, an exhaust passage formed inside the manufactured exhaust pipe significantly affects the exhaust performance of an actual vehicle. According to the present invention, the holding member 22 can be formed by press working as described above while securing the high degree of freedom of the cross-sectional area. This makes it possible to form the holding member 22 with the cross-sectional area optimum and effective for improving the exhaust performance without considering the manufacturability such as bending because the degree of freedom of the shape of the exhaust passage is large at this time.

Further, the holding member 22 is disposed on the upstream side of the catalyst unit 21, and the effect of the large degree of freedom of the shape obtained by which the holding member 22 is formed to have a two-piece divided structure with respect to the upstream side is exhibited. The holding member 22 is disposed in the narrow and small space positioned close to the exhaust port as described previously, and the holding member 22 can be formed into the shape capable of being disposed even in such a narrow and small space with ease. Thus, the holding member 22 is disposed at a position effective for early activation of the catalyst 21A, resulting in that the exhaust performance can be improved effectively. When the catalyst unit 21 is disposed as above, the improvement of the degree of freedom of the layout of the catalyst unit 21 can be achieved.

Further, the holding member 22 is formed to bend toward the exhaust port from the immediate upstream side of the catalyst 21A. In the case when an exhaust pipe and a catalyst are connected by using taper pipes as has been explained in a conventional example, an overall linear portion has had to be lengthened. In contrast to this, in the present invention, the holding member 22 is formed to have a two-piece divided structure, so that such a linear portion can be omitted practically. Then, with respect also to this point, early activation of the catalyst 21A by shortening the length of the exhaust pipe 19 on the upstream side of the catalyst 21A in particular, and further the improvement of the degree of freedom of the layout of the catalyst unit 21 can be achieved.

Further, the holding member 22 is formed in a manner that the cross-sectional area thereof is gradually increased to the catalyst 21A. That is, the holding member 22 is formed into a tapered shape so that the diameter of the holding member 22 is enlarged to the catalyst 21A, and thereby exhaust resistance (inflow and outflow of exhaust to and from the catalyst 21A) can be decreased. This can be achieved because the degree of freedom of the shape by the two-piece divided structure is increased. If the bending degree of the holding member 22 is large, namely a curvature radius is small tentatively, the exhaust resistance is increased. However, the holding member 22 is formed into the tapered shape in which the diameter of the holding member 22 is enlarged to the catalyst 21A, and thereby the cause of the increase in the resistance can be made extremely small.

Further, the holding member 22 is disposed under the engine 11. As described previously, as for the space under the engine 11, a plurality of peripheral members such as the swing axis 108 and the bracket 109 is disposed in the narrow and small space. The holding member 22 of the present invention has the large degree of freedom in terms of the shape, so that the extremely large effect is exhibited with respect to such a narrow and small space on the layout. Further, the holding member 22 is disposed under the engine, so that the holding member 22 is excellent in effectiveness of early activation with respect to the catalyst 21A disposed immediately downstream from the exhaust port.

In the foregoing, the present invention has been explained with various embodiments, but the present invention is not limited only to these embodiments and may be changed within the scope of the present invention.

For example, the example where the holding member 22 is divided into the upper and lower members has been explained, but a case where the direction in which the holding member 22 is divided is moderately inclined from the up and down direction is also included.

According to the present invention, the catalyst holding part can be formed by press working typically while securing the high degree of freedom of the cross-sectional area. This makes it possible to form the catalyst holding part with the cross-sectional area optimum and effective for improving the exhaust performance without considering the manufacturability such as bending. The catalyst holding part is disposed on the upstream side of the catalyst and can be formed into the shape capable of being disposed in the narrow and small space positioned close to the exhaust port, and thus it is possible to effectively achieve the improvement of the degree of freedom of the layout while effectively improving the exhaust performance.

## Claims

1. An exhaust pipe structure (19) of a swing-type power unit (10) including an internal combustion engine (11) that includes: an engine (11) in which a cylinder disposed substantially horizontally is projectingly provided on a vehicle body frame; an exhaust pipe (19) through which a combustion gas is discharged from a combustion chamber in a cylinder head (12B) in the engine; and a catalyst (21) disposed in the middle of the exhaust pipe (19), the exhaust pipe (19) structure comprising:
a catalyst holding member (22) holding an end portion of the catalyst (21A) is divided by a plane through a center axis of the exhaust pipe (19),
**characterized in that** an overall shape of the catalyst holding member (22) is formed into an arc shape having an arc length of about 1/4 of a circumference and in a manner that a cross-sectional area thereof is increased gradually toward the catalyst (21A), and the catalyst holding member (22) is disposed so as to get into a space between a swing axis ( 108A) and a crank case (13) in a front and rear direction and a space between the cylinder head (12B) and a bracket(109) supporting the swing axis (108A) in a vertical direction.

2. The exhaust pipe structure of the internal combustion engine according to claim 1, wherein
the catalyst holding member (22) holds the catalyst (21A) on an exhaust upstream side.

3. The exhaust pipe structure of the internal combustion engine according to claim 1, wherein
the catalyst holding member (22) is formed to bend from an immediate upstream side of the catalyst (21A).

4. The exhaust pipe structure of the internal combustion engine according to claim 1, wherein
the catalyst holding member is disposed under the engine.

## Patentansprüche

1. Abgasrohrstruktur (19) einer Antriebseinheit vom Schwenktyp (10) mit einem Verbrennungsmotor (11), die aufweist: einen Motor (11), in welchem ein im Wesentlichen horizontal angeordneter Zylinder an einem Fahrzeugkarosserierahmen vorstehend vorgesehen ist; ein Abgasrohr (19), durch welches hindurch ein Verbrennungsgas aus einer Brennkammer in einen Zyünderkopf (12B) in dem Motor strömt; und einen Katalysator (21), der in der Mitte des Abgasrohres (19) angeordnet ist, wobei die Abgasrohrstruktur (19) aufweist:
ein Katalysatorhalteelement (22), das einen Endabschnitt des Katalysators (21A) hält und durch eine Ebene durch eine Mittelachse des Abgasrohres (19) geteilt ist,
**dadurch gekennzeichnet, dass** eine Gesamtform des Katalysatorhalteelements (22) in einer Bogenform mit einer Bogenlänge von etwa 1/4 eines Umfangs und in einer Weise ausgebildet ist, dass eine Querschnittsfläche davon in Richtung zu dem Katalysator (21A) allmählich vergrößert ist, und das Katalysatorhalteelement (22) derart angeordnet ist, dass es in einen Raum zwischen einer Schwenkachse (108A) und einem Kurbelwellengehäuse (13) in einer Vor- und Rückrichtung und einen Raum zwischen dem Zylinderkopf (12B) und einer die Schwenkachse (108A) abstützenden Klammer (109) in einer Vertikalrichtung eindringt.

2. Abgasrohrstruktur des Verbrennungsmotors nach Anspruch 1, wobei das Katalysatorhalteelement (22) den Katalysator (21A) an einer stromaufwärts gerichteten Abgasseite hält.

3. Abgasrohrstruktur des Verbrennungsmotors nach Anspruch 1, wobei das Katalysatorhalteelement (22) derart ausgebildet ist, dass es von einer direkten stromaufwärts gerichteten Seite des Katalysators (21A) abbiegt.

4. Abgasrohrstruktur des Verbrennungsmotors nach Anspruch 1, wobei das Katalysatorhalteelement unter dem Motor angeordnet ist.

## Revendications

1. Structure de tuyau d'échappement (19) d'un groupe moteur du type oscillant (10) qui comprend un moteur à combustion interne (11) comprenant : un moteur (11) dans lequel est fourni de manière saillante un cylindre disposé de manière sensiblement horizontale sur un châssis de véhicule ; un tuyau d'échappement (19) à travers lequel sont évacués les gaz de combustion en provenance d'une chambre de combustion dans une culasse (12B) dans le moteur ; et un catalyseur (21) disposé au milieu du tuyau d'échappement (19), la structure de tuyau d'échappement (19) comprenant :
un élément de support de catalyseur (22) qui supporte une partie extrémité du catalyseur (21A), est divisé par un plan qui passe par l'axe central du tuyau d'échappement (19) ;
**caractérisée en ce que** la forme globale de l'élément de support de catalyseur (22) est formée en une forme arquée dont la longueur d'arc est égale à environ 1/4 d'une circonférence, et de telle sorte que la superficie en coupe de celui-ci augmente de manière progressive vers le catalyseur (21A), et l'élément de support de catalyseur (22) est disposé de façon à pénétrer dans un espace situé entre un axe d'oscillation (108A) et un carter de vilebrecluin (13) dans une direction avant et arrière, et dans un espace situé entre la culasse (12B) et un support (109) qui supporte l'axe d'oscillation (108A) dans une direction verticale.

2. Structure de tuyau d'échappement du moteur à combustion interne selon la revendication 1, dans laquelle :
l'élément de support de catalyseur (22) supporte le catalyseur (21A) du côté amont du flux d'échappement.

3. Structure de tuyau d'échappement du moteur à combustion interne selon la revendication 1, dans laquelle :
l'élément de support de catalyseur (22) est formé de façon à être coudé à partir du côté flux amont immédiat du catalyseur (21A).

4. Structure de tuyau d'échappement du moteur à combustion interne selon la revendication 1, dans laquelle :
l'élément de support de catalyseur est disposé sous le moteur.
